# EUROPÄISCHE PATENTANMELDUNG

(11) **EP 3 229 129 A1**
(43) Veröffentlichungstag der Anmeldung: **11.10.2017**
(21) Anmeldenummer: 16163972.9
(22) Anmeldetag: 06.04.2016
(51) Int. Cl.: G06F 3/16, G06F 3/038, G06F 3/02

(54) **SYSTEM ZUM KONTINUIERLICHEN ÜBERTRAGEN VON AUDIOINFORMATIONEN**

(71) Anmelder: Speech Processing Solutions GmbH, 1100 Wien (AT)
(72) Erfinder: Podhradsky, Gerhard, 2232 Deutsch Wagram (AT)
(74) Vertreter: Schwarz & Partner Patentanwälte OG

(57) **Zusammenfassung**

System mit einem Computer (2), der eine USB Schnittstelle aufweist, einer an die USB-Schnittstelle angesteckten Maus (4), die einen USB-Controller (5) aufweist und als USB Human Interface Device (14) zum Steuern einer von dem Computer (2) abgearbeiteten Diktierapplikation ausgebildet ist, und mit einem Headset (3) zum Ein- und Wiedergeben von Audioinformationen, wobei die Maus (4) eine erste Funkschnittstelle (6) aufweist, über die Audioinformationen kontaktlos zwischen Maus (4) und Headset (3) übertragen werden, und, dass der USB-Controller (5) als USB Audio Device (12) zum kontinuierlichen Übertragen der Audioinformationen zwischen Maus (4) und Computer (2) ausgebildet ist.

## Beschreibung

Die Erfindung betrifft ein System mit einem Computer, der eine USB-Schnittstelle aufweist, einer mit der USB-Schnittstelle verbundenen Maus, die einen USB-Controller aufweist und als USB Human Interface Device zum Steuern einer von dem Computer abgearbeiteten Diktierapplikation ausgebildet ist, und mit einem Headset zum Ein- und Wiedergeben von Audioinformationen.

Die Erfindung betrifft weiters ein Verfahren zum kontinuierlichen Übertragen von Audioinformationen zwischen einem Computer mit einer USB-Schnittstelle und einer mit der USB-Schnittstelle des Computers verbundenen Maus, die einen USB-Controller aufweist und als USB Human Interface Device zum Steuern einer von dem Computer abgearbeiteten Diktierapplikation ausgebildet ist, wobei die Audioinformationen mit einem Headset ein- und wiedergegeben werden.

Fortschritte im Bereich der Spracherkennungssoftware und der Verarbeitung von Sprache in digitalen Text eröffnen neue Möglichkeiten für das Diktieren, beziehungsweise die Diktiertechnologie, insbesondere im Bereich der Schreibtischarbeit. So können in ein Mikrophon eines, mit einem Computer verbundenen, Diktiergeräts eingesprochene Diktate im Wesentlichen in Echtzeit in digitalen Text umgewandelt werden, was den Arbeitsaufwand erheblich zu reduzieren vermag. Als nachteilig erweist sich hierbei allerdings, dass, durch die manuelle Bedienung des Diktiergeräts, das gleichzeitige Bedienen eines manuellen Eingabegerätes, beispielsweise einer Maus oder einer Tastatur, erschwert oder gar unmöglich wird.

Das Dokument US 7 308 231 B2 offenbart ein System bei dem eine Maus die Funktion einer Freisprecheinrichtung übernimmt. Dabei weist die Maus einen Lautsprecher und ein Mikrophon auf und wird mittels Bluetooth-Standard kabellos mit einem Handy oder einem Laptop verbunden. Die Maus kann als Freisprecheinrichtung für das Handy oder den Laptop verwendet werden, wobei Steuerinformationen, also Tastenklicks an der Maus, ebenfalls über Bluetooth-Standard an den Laptop übermittelt werden.

Bei dem bekannten System hat sich als Nachteil erwiesen, dass ein Bluetooth-Modul mit dem optischen Schaltkreis der Maus, welcher die Mausbewegungen der Maus detektiert und an den Laptop übermittelt, gekoppelt ist. Hierdurch müssen sowohl die Mausdaten als auch die Audiodaten und die Steuerinformationen über die Bluetooth-Verbindung übertragen werden, was zu Problemen bei der Übertragungsqualität und zu Übertragungslücken führen kann.

Der Erfindung liegt die Aufgabe zugrunde, ein System und ein zugehöriges Verfahren zur kontinuierlichen Übertragung von Audioinformationen zwischen einem Mikrophon und einem Computer zu schaffen, bei dem die zuvor genannten Nachteile nicht auftreten, und bei dem die Übertragungsqualität verbessert wird.

Erfindungsgemäß wird diese Aufgabestellung bei einem System dadurch gelöst, dass die Maus eine erste Funkschnittstelle aufweist, über die Audioinformationen kontaktlos zwischen Maus und Headset übertragen werden, und, dass der USB-Controller als USB Audio Device zum kontinuierlichen Übertragen der Audioinformationen zwischen Maus und Computer ausgebildet ist.

Erfindungsgemäß wird diese Aufgabestellung bei einem Verfahren dadurch gelöst, dass folgende Verfahrensschritte gegebenenfalls gleichzeitig durchgeführt werden:
A) Kontaktloses Empfangen der Audioinformationen vom Headset mit einer ersten Funkschnittstelle der Maus,
B) Übermitteln der Audioinformationen von der ersten Funkschnittstelle der Maus an den USB-Controller, und
C) Übertragen der Audioinformationen vom USB-Controller als USB Audio Device an den Computer, und/oder
C) Übertragen der Audioinformationen vom Computer an den das USB Audio Device bildenden USB-Controller,
B) Übermitteln der Audioinformationen vom USB-Controller an die erste Funkschnittstelle der Maus, und
A) Kontaktloses Senden der Audioinformationen von der ersten Funkschnittstelle der Maus an das Headset.

Bei dem erfindungsgemäßen System ist der Vorteil erhalten, dass eine Funkschnittstelle, die kabellos Audioinformationen vom Headset empfängt beziehungsweise zum Headset sendet, und ein Mausmodul, das die Mausbewegungen der Maus in Form von Mausbewegungsinformationen, getrennt voneinander, jeweils direkt mit dem USB-Controller verbunden sind und mit diesem kommunizieren. Die Maus, beziehungsweise der USB-Controller, ist über eine USB-Verbindung, beispielsweise ein konventionelles USB-Kabel, und über die USB-Schnittstelle mit dem Computer verbunden, und bildet gegenüber dem Computer sowohl ein konventionelles USB Audio Device, entsprechenden der USB Audio Device Klasse, als auch eine konventionelle USB Maus als USB Mouse Device, entsprechend der USB Mouse Device Klasse, ab. Die Datenübertragung der Audioinformationen kann somit vorteilhafterweise kontinuierlich und mit hoher Qualität erfolgen. Hierdurch können Signalunterbrechungen und ein Qualitätsverlust insbesondere der Audioinformationen verhindert werden. Die kontaktlose Übertragung der Audioinformationen zwischen Maus und Headset wird dabei vorteilhafterweise vollständig von der USB-Übertragung zwischen Maus und Computer entkoppelt, wodurch der Computer auch keine kontaktlose Schnittstelle benötigt.

In einer vorteilhaften Ausgestaltung der Erfindung, weist die Maus eine oder mehrere Diktiertaste auf, die das Aufnehmen und Wiedergeben von Diktaten unterstützen. Dabei ist der USB-Controller zum Übertragen der mit den Diktiertasten eingegebenen Tasteninformationen über das USB Human Interface Device, über einen von dem Computer abgearbeiteten Diktierbefehlstreiber, zum Steuern der von dem Computer abgearbeiteten Diktierapplikation ausgebildet. Hierdurch ist der Vorteil erhalten, dass das Aufnehmen und Wiedergeben von Diktaten schnell und benutzerfreundlich direkt über die Diktiertasten an der Maus ausgeführt werden kann, ohne zwischen verschiedenen Hardware- oder Softwarelösungen wechseln zu müssen.

In einer besonders vorteilhaften Ausgestaltung der Erfindung ist ein Schiebeschalter oder ein Wippschalter als Diktiertaste an der Maus vorgesehen. Hierdurch kann das manuelle Umschalten zwischen dem Aufnehmen und Wiedergeben von Diktaten auf vorteilhafte Weise besonders schnell und intuitiv durchgeführt werden.

In einer weiteren vorteilhaften Ausgestaltung der Erfindung ist der USB-Controller zum Zusammenfassen des USB Audio Device, des USB Human Interface Device und des USB Mouse Device, der zum kontinuierlichen Übertragen der vom Mausmodul übermittelten Mausbewegungsinformationen ausgebildet ist, zu einem gemeinsamen USB Composite Device ausgebildet. Der USB-Controller ist dabei zum kontinuierlichen Übertragen der Audioinformationen, der Tasteninformationen und der Mausbewegungsinformation über das USB Composite Device zwischen Maus und Computer ausgebildet ist. Hierdurch ist der Vorteil erhalten, dass drei USB Devices mit unterschiedlichen USB Device Klassen innerhalb der Maus getrennt voneinander vom USB-Controller verarbeitet werden, und dann gemeinsam als USB Composite Device an die USB-Schnittstelle des Computers übertragen werden, wobei der Computer die Maus vorteilhafterweise als USB Composite Device detektiert. Hierdurch erkennt ein handelsüblicher Computer die Maus automatisch, wodurch diese sofort und ohne zusätzliches Installieren von Software oder Treibersoftware einsatzfähig ist. Durch das vorteilhafte übermitteln der Daten des USB Audio Device und des USB Human Interface Device kann, nach entsprechender optionaler Installation der Diktierbefehlstreiber, auch die Diktierapplikation vom Computer abgearbeitet und mittels der Diktiertasten an der Maus gesteuert werden.

Vorteilhafterweise entspricht die erste Funkschnittstelle dem Bluetooth-Standard, und die Audioinformationen zwischen der ersten Funkschnittstelle und einem entsprechenden Headset können so als "Wideband Speech" oder als "Advanced Audio Distribution Profile" übertragen werden, was eine besonders gute Tonqualität gewährleistet.

In einer weiteren vorteilhaften Ausgestaltung der Erfindung weist die Maus eine zweite Funkschnittstelle auf, die kontaktlos mit einer dritten Funkschnittstelle eines an die USB-Schnittstelle des Computers angesteckten USB-Dongles kommuniziert, wobei die Audioinformationen, und gegebenenfalls ebenso die Tasteninformationen und die Mausbewegungsinformationen, zwischen Maus und USB-Dongle kontaktlos über die zweite Funkschnittstelle und die dritte Funkschnittstelle übertragen werden. Hierdurch ist der Vorteil erhalten, dass die USB-Übertragung der Audioinformationen, und gegebenenfalls ebenso der Tasteninformationen und der Mausbewegungsinformationen, zwischen der Maus und dem Computer ebenfalls kontaktlos erfolgen kann.

Vorteilhafterweise ist der USB-Dongle des erfindungsgemäßen Systems zum Zusammenfassen des USB Audio Device, des USB Human Interface Device und des USB Mouse Device zu einem gemeinsamen USB Composite Device, und als USB Composite Device zum kontinuierlichen Übertragen der Audioinformationen, der Tasteninformationen und der Mausbewegungsinformationen zwischen USB-Dongle und Computer ausgebildet. Hierdurch detektiert der Computer die Maus als USB Composite Device, was mit den zuvor beschriebenen Vorteilen einhergeht.

Die Erfindung wird nun anhand nicht einschränkender Ausführungsbeispiele unter Bezugnahme auf die Zeichnungen näher beschrieben.
Figur 1 zeigt ein Blockschaltbild eines Systems gemäß einem ersten Ausführungsbeispiel der Erfindung.
Figur 2 zeigt ein Blockschaltbild eines Systems gemäß einem weiteren Ausführungsbeispiel der Erfindung.

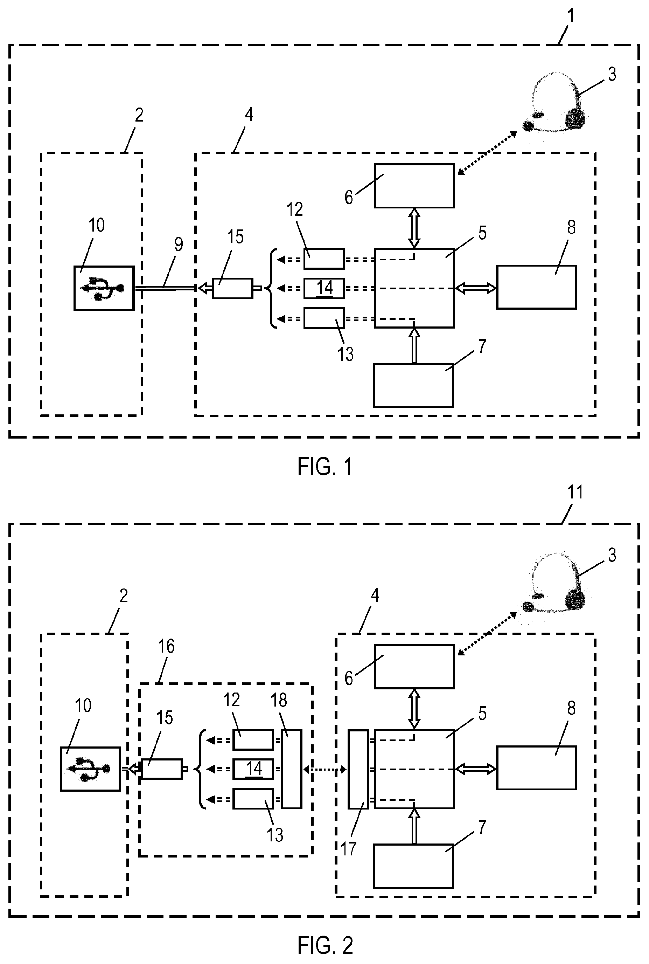

Figur 1 zeigt ein Blockschaltbild eines Systems 1 gemäß einem ersten Ausführungsbeispiel der Erfindung. Das System 1 weist einen Computer 2, ein Headset 3 und eine Maus 4 auf. Die Maus 4 weist einen USB-Controller 5, eine erste Funkschnittstelle 6 und ein Mausmodul 7 auf. Weiters kann die Maus 4 eine oder mehrere Diktiertasten 8 aufweisen. Die Maus 4, und somit der USB-Controller 5, können über eine USB-Verbindung 9, beispielsweise ein USB-Kabel, und über die USB-Schnittstelle 10 mit dem Computer 2 verbunden sein. Hierdurch kommuniziert die Maus 4 mit dem Computer 2, was bedeutet, dass Informationen, oder Daten, von der Maus 4 zum Computer 2, oder vom Computer 2 zur Maus 4, übertragen werden.

Die erste Funkschnittstelle 6 ist kontaktlos mit dem Headset 3, welches im vorliegenden Fall ein entsprechend kontaktlos ansprechbares Headset 3 ist, verbunden und kommuniziert mittels kontaktloser Übertragung mit diesem. Das bedeutet, dass Informationen, insbesondere "Pulse Code Modulation (PCM)"-Audioinformationen, vom Headset 3 zur ersten Funkschnittstelle 6, oder von der ersten Funkschnittstelle 6 zum Headset 3, übertragen werden. Arbeitet der Computer 2 beispielsweise eine Diktierapplikation ab, werden beispielsweise bei einer "Aufnahme" Audioinformationen vom Headset 3 zur ersten Funkschnittstelle 6 übertragen. Beispielsweise bei einer "Wiedergabe" werden Audioinformationen von der ersten Funkschnittstelle 6 zum Headset 3 übertragen.

Als kontaktlose Kommunikations- beziehungsweise Übertragungstechnologie kann der Bluetooth-Standard verwendet werden. Dieser weist die Vorteile auf, dass es sich, erstens, um eine sehr robuste und Strom-effiziente Kommunikations- beziehungsweise Übertragungstechnologie handelt, und, zweitens, dass handelsübliche, Bluetoothkompatible Headsets verwendet werden können. Optional können die Audioinformationen mittels Bluetooth-Standard auch als "Wideband Speech" übertragen werden. Hierbei wird das Audiosignal mit 16 Kilohertz abgetastet und ergibt somit eine sehr gute Tonqualität. Alternativ können die Audioinformationen mittels Bluetooth-Standard auch als "Advanced Audio Distribution Profile" übertragen werden. Über den "Low Complexity Subband Codec" unterstützt das "Advanced Audio Distribution Profile" Bitraten von bis zu 345 Kilobit pro Sekunde, sodass eine Tonqualität vergleichbar mit der einer Compact Disc (CD) erreicht wird. Alternativ kann auch der "Digital Enhanced Cordless Telecommunications (DECT)"-Standard oder die weltweite Funkapprobation als Kommunikationsbeziehungsweise Übertragungstechnologie verwendet werden.

Die erste Funkschnittstelle 6 ist innerhalb der Maus 4 mit dem USB-Controller 5 über einen gemeinsamen Schaltkreis, beispielsweise auf einer Leiterplatte, verbunden und übermittelt/ empfängt die Audioinformationen an den/ vom USB-Controller 5. Die Audioinformationen können als PCM-Audioinformationen, beziehungsweise digitale PCM-Audiodaten, übermittelt werden. Binär codierte PCM-Audiodaten beispielsweise haben den Vorteil einer hohen Störungstoleranz während der Übertragung. Alternativ können auch andere technische Modulationsverfahren, die einem Fachmann auf einem verwandten Gebiet des Stands der Technik wohlbekannt sind, angewendet werden. Der USB-Controller 5 wandelt die Audioinformationen in ein USB Audio Protokoll um. Der USB-Controller 5 tritt folgend als USB Audio Device 12 auf, und wird als solches vom Computer 2 erkannt. Der USB-Controller kann somit als USB Audio Device 12 zum kontinuierlichen Übertragen der Audioinformationen zwischen Maus 4 und Computer 2 ausgebildet sein.

Das Mausmodul 7 ist innerhalb der Maus 4 mit dem USB-Controller 5 über einen gemeinsamen Schaltkreis, beispielsweise auf einer Leiterplatte, verbunden. Das Mausmodul 7 detektiert Mausbewegungen der Maus 4 und übermittelt Mausbewegungsinformationen an den USB-Controller 5. Einem Fachmann auf einem verwandten Gebiet des Stands der Technik sind entsprechende Technologien zum Detektieren und Verarbeiten von Mausbewegungen und Mausbewegungsinformationen wohlbekannt. Der USB-Controller 5 wandelt die Mausbewegungsinformationen in ein USB Mouse Protokoll um. Der USB-Controller 5 tritt folgend als USB Mouse Device 13 auf, und wird als solches vom Computer 2 erkannt. Der USB-Controller kann somit als USB Mouse Device 13 zum kontinuierlichen Übertragen der Audioinformationen zwischen Maus 4 und Computer 2 ausgebildet sein.

Die Diktiertasten 8 sind elektronisch ebenfalls mit dem USB-Controller 5 über einen gemeinsamen Schaltkreis, beispielsweise auf einer Leiterplatte, verbunden. Die Diktiertasten 8 können als Schiebeschalter und/oder Wippschalter an der Maus 4 vorgesehen sein. Die vom USB-Controller 5 empfangenen Befehle, beziehungsweise Tasteninformationen, werden vom USB-Controller 5 in ein USB Human Interface Device Protokoll verwandelt. Der USB-Controller 5 tritt folgend als USB Human Interface Device 14 auf, und wird als solches vom Computer 2 erkannt. Der USB-Controller kann somit als USB Human Interface Device 14 zum Steuern einer von dem Computer 2 abgearbeiteten Diktierapplikation ausgebildet sein. Hierzu wird gegebenenfalls ein Diktierbefehlstreiber oder eine vergleichbare Software auf den Computer 2 überspielt und installiert, welche dann vom Computer 2 abgearbeitet wird. Das entsprechende Überspielen und Installieren von Treibersoftware ist einem Fachmann auf einem verwandten Gebiet des Stands der Technik wohlbekannt.

Alternativ können die Diktiertasten 8 auch eigenständig ausgebildet sein, beispielsweise als Hand-Keyboard oder als Fußtasten. In diesem Zusammenhang sind die Tasten nicht Teil der Maus 4, aber elektronisch kabelgebunden oder kontaktlos über einen gemeinsamen Schaltkreis mit der Maus 4 beziehungsweise dem USB-Controller 5 verbunden.

Der USB-Controller 5 kann folglich drei getrennte USB Devices ausgeben, nämlich das USB Audio Device 12, das USB Mouse Device 13 und das USB Human Interface Device 14. Diese können vom USB-Controller 5 zu einem Composite Device 15 zusammengefasst werden und somit über die USB-Verbindung 9, beispielsweise ein USB-Kabel, und über die USB-Schnittstelle 10 auf den Computer 2 übertragen werden. Der USB-Controller 5, beziehungsweise die Maus 4, tritt folgend als USB Composite Device 15 auf, und wird als solches vom Computer 2 erkannt. Der USB-Controller kann somit weiters als USB Composite Device 15 zum Steuern einer von dem Computer 2 abgearbeiteten Diktierapplikation, sowie zum kontinuierlichen Übertragen der Audioinformationen, der Tasteninformationen und der Mausbewegungsinformationen zwischen Maus 4 und Computer 2 ausgebildet sein.

Ein erfindungsgemäßes Verfahren zum kontinuierlichen Übertragen von Audioinformationen mit dem System 1 gemäß dem ersten Ausführungsbeispiel der Erfindung kann beispielweise folgendermaßen durchgeführt werden:
1) Ein Benutzer bringt eine Diktiertaste 8, die an der Maus 4 als Schiebeschalter ausgeführt ist, manuell von einer neutralen Stellung in eine Tastenstellung "Aufnahme".
2) In einem Verfahrensschritt D detektiert ein Tastencontroller die entsprechende Tastenstellung.
3) In einem Verfahrensschritt E überträgt der USB-Controller 5 die entsprechende Tasteninformation als Human Interface Device 14 über die USB-Verbindung 9 an den Computer 2, um diesen über den vom Computer 2 abgearbeiteten Diktierbefehlstreiber zu steuern.
4) In einem Verfahrensschritt F arbeitet der Computer 2 die Befehle vom USB-Controller 5 innerhalb der Diktierapplikation entsprechend ab, und startet eine Aufnahmefunktion innerhalb der Diktierapplikation.
5) In einem Verfahrensschritt A empfängt die erste Funkschnittstelle 6 der Maus 4 kontaktlos, beispielsweise über eine Bluetooth-Verbindung, die vom Benutzer in das Headset 3 eingesprochenen oder andersartig eingebrachten Audioinformationen.
6) In einem Verfahrensschritt B übermittelt die erste Funkschnittstelle 6 der Maus 4 die Audioinformationen an den USB-Controller 5, wobei diese Übermittlung innerhalb der Maus 4 anhand eines gemeinsamen Schaltkreises, beispielsweise auf einer Leiterplatte, erfolgen kann.
7) In einem Verfahrensschritt C überträgt der USB-Controller 5 als USB Audio Device 12 die Audioinformationen über die USB-Verbindung 9, beispielsweise ein USB-Kabel, an den Computer 2.
8) Der Benutzer bringt die Diktiertaste 8 zurück in eine neutrale Stellung.
9) Der USB-Controller 5 detektiert die entsprechende Tastenstellung und überträgt die entsprechende Tasteninformation an den Computer 2, um diesen über den vom Computer 2 abgearbeiteten Diktierbefehlstreiber zu steuern.
10) Der Computer 2 arbeitet die Befehle vom USB-Controller 5 innerhalb der Diktierapplikation entsprechend ab, und beendet die Aufnahmefunktion innerhalb der Diktierapplikation, wodurch die Aufnahme abgeschlossen ist.

Will der Benutzer beispielsweise eine Wiedergabe der zuvor gemachten Aufnahme durchführen, kann dies folgendermaßen durchgeführt werden:
1) Ein Benutzer bringt eine Diktiertaste 8, die an der Maus 4 als Schiebeschalter ausgeführt ist, manuell von einer neutralen Stellung in eine Tastenstellung "Wiedergabe".
2) In einem Verfahrensschritt D detektiert der Tastencontroller die entsprechende Tastenstellung.
3) In einem Verfahrensschritt E überträgt der USB-Controller 5 die entsprechende Tasteninformation als Human Interface Device 14 über die USB-Verbindung 9 an den Computer 2, um diesen über den vom Computer 2 abgearbeiteten Diktierbefehlstreiber zu steuern.
4) In einem Verfahrensschritt F arbeitet der Computer 2 die Befehle vom USB-Controller 5 innerhalb der Diktierapplikation entsprechend ab, und startet eine Wiedergabefunktion innerhalb der Diktierapplikation.
5) In einem Verfahrensschritt C überträgt der Computer 2 die Audioinformationen über die USB-Verbindung 9, beispielsweise ein USB-Kabel, über das USB Audio Device 12 an den USB-Controller 5.
6) In einem Verfahrensschritt B übermittelt der USB-Controller 5 die Audioinformationen an die erste Funkschnittstelle 6 der Maus 4, wobei diese Übermittlung innerhalb der Maus 4 anhand eines gemeinsamen Schaltkreises, beispielsweise auf einer Leiterplatte, erfolgen kann.
7) In einem Verfahrensschritt A sendet die erste Funkschnittstelle 6 der Maus 4 kontaktlos, beispielsweise über eine Bluetooth-Verbindung, die vom USB-Controller 5 übermittelten Audioinformationen an das Headset 3.
8) Der Benutzer bringt die Diktiertaste 8 zurück in eine neutrale Stellung.
9) Der USB-Controller 5 detektiert die entsprechende Tastenstellung und überträgt die entsprechende Tasteninformation an den Computer 2, um diesen über den vom Computer 2 abgearbeiteten Diktierbefehlstreiber zu steuern.
10) Der Computer 2 arbeitet die Befehle vom USB-Controller 5 innerhalb der Diktierapplikation entsprechend ab, und beendet die Wiedergabefunktion innerhalb der Diktierapplikation, wodurch die Wiedergabe abgeschlossen ist.

Findet ein kontinuierliches Übertragen von Audioinformationen durch einen Benutzer statt, ermöglicht das erfindungsgemäße System vorteilhafterweise ein gegebenenfalls gleichzeitiges Durchführen der oben beschriebenen Schritte 1-10 beziehungsweise Verfahrensschritte A-I, ohne dabei die Qualität der übertragenen Audioinformationen negativ zu beeinflussen. So können beispielsweise Audioinformationen und Tasteninformationen gleichzeitig von der Maus 4 an den Computer 2 übertragen werden, da die Audioinformationen als USB Audio Device 12 und die Tasteninformationen als Human Interface Device 14 übertragen werden.

Analog können gegebenenfalls gleichzeitig Mausbewegungen der Maus 4, die mit dem Mausmodul 7 detektiert werden an den Computer 2 übertragen werden, ohne dabei die Qualität der übertragenen Audioinformationen negativ zu beeinflussen. Dies kann folgendermaßen durchgeführt werden:
11) Ein Benutzer bewegt die Maus 4 auf einer Unterlage, beispielsweise einem Schreibtisch.
12) In einem Verfahrensschritt G detektiert das das Mausmodul 7, beispielweise optisch, die Mausbewegung der Maus 4.
13) In einem Verfahrensschritt H übermittelt das Mausmodul 7 die entsprechenden Mausbewegungsinformationen an den USB-Controller 5 innerhalb der Maus 4, wobei diese Übermittlung anhand eines gemeinsamen Schaltkreises, beispielsweise einer Leiterplatte, erfolgen kann.
14) In einem Verfahrensschritt I überträgt der USB-Controller 5 als USB Mouse Device 13 die Mausbewegungsinformationen über die USB-Verbindung 9, beispielsweise ein USB-Kabel, an den Computer 2.

Der USB-Controller 5 ist dabei vorteilhafterweise zum Zusammenfassen des USB Audio Device 12, des USB Human Interface Device 14 und des USB Mouse Device 13 zu einem gemeinsamen USB Composite Device 15 ausgebildet. Der USB-Controller 5 kann so die Übertragung der Tasteninformationen, der Audioinformationen und der Mausbewegungsinformationen als USB Composite Device 15 durchführen.

Figur 2 zeigt ein Blockschaltbild eines Systems 11 gemäß einem weiteren Ausführungsbeispiel der Erfindung. Das System 11 ist im Wesentlichen identisch mit dem System 1 gemäß dem ersten Ausführungsbeispiel der Erfindung aufgebaut. Der Unterschied besteht darin, dass anstelle der USB-Verbindung 9, die kabelgebunden, beispielsweise über ein USB-Kabel, ausgeführt ist, ist eine kontaktlose Verbindung zwischen einer zweiten Funkschnittstelle 17 der Maus 4 und einer dritten Funkschnittstelle 18 eines USB-Dongles 16 vorgesehen. Der USB-Dongle 16 ist an die USB-Schnittstelle 10 des Computers 2 angesteckt, und kommuniziert mittels kontaktloser Übertragung mit diesem. Das bedeutet, dass Informationen, insbesondere Audioinformationen, aber gegebenenfalls auch Tasteninformationen und Mausbewegungsinformationen von der zweiten Funkschnittstelle 17 der Maus 4 an die dritte Funkschnittstelle 18 des USB-Dongles 16, oder umgekehrt, übertragen werden können.

Der USB-Dongle 16 kann vorteilhafterweise einige Aufgaben und Funktionen des USB-Controllers 5 übernehmen. Beispielsweise kann der USB-Dongle 16 über die dritte Funkschnittstelle 18 drei getrennte USB Devices vom USB-Controller 5, nämlich das USB Audio Device 12, das USB Mouse Device 13 und das USB Human Interface Device 14, empfangen. Diese können vom USB-Dongle 16 zu einem Composite Device 15 zusammengefasst über die USB-Schnittstelle 10 auf den Computer 2 übertragen werden. Der USB-Dongle 16, beziehungsweise die Maus 4, tritt folgend als USB Composite Device 15 auf, und wird als solches vom Computer 2 erkannt. Der USB-Dongle 16 kann somit zum kontinuierlichen Übertragen der Audioinformationen, der Tasteninformationen und der Mausbewegungsinformationen zwischen Maus 4 und Computer 2 ausgebildet sein.

Ein erfindungsgemäßes Verfahren zum kontinuierlichen Übertragen von Audioinformationen mit dem System 11 gemäß dem zweiten Ausführungsbeispiel der Erfindung kann im Wesentlichen analog zum Verfahren gemäß dem ersten Ausführungsbeispiel der Erfindung durchgeführt werden. Der wesentliche Unterschied besteht darin, dass in den Verfahrensschritten C), E) und I) die Tasteninformationen, die Audioinformationen, und die Mausbewegungsinformationen jeweils vom USB-Controller 5 kontaktlos über die zweite Funkschnittstelle 17 der Maus 4 und die dritte Funkschnittstelle 18 des USB-Dongles 16 an den USB-Dongle 16, beziehungsweise den Computer 2, übertragen werden können. Der USB-Dongle 16 kann dabei einige Aufgaben und Funktionen des USB-Controllers 5 übernehmen, wobei der USB-Dongle 16 die Tasteninformationen als USB Human Interface Device 14, die Audioinformationen als USB Audio Device 12, und die Mausbewegungsinformationen als USB Mouse Device 13 zu einem gemeinsamen USB Composite Device 15 zusammenfasst, und die Tasteninformationen, die Audioinformationen und die Mausbewegungsinformationen als USB Composite Device 15 an den Computer 2 übermittelt.

## Patentansprüche

1. System mit einem Computer (2), der eine USB Schnittstelle (10) aufweist, einer mit der USB-Schnittstelle (10) verbundenen Maus (4), die einen USB-Controller (5) aufweist und als USB Human Interface Device (14) zum Steuern einer von dem Computer (2) abgearbeiteten Diktierapplikation ausgebildet ist, und mit einem Headset (3) zum Ein- und Wiedergeben von Audioinformationen, **dadurch gekennzeichnet, dass**
die Maus (4) eine erste Funkschnittstelle (6) aufweist, über die Audioinformationen kontaktlos zwischen Maus (4) und Headset (3) übertragen werden, und, dass der USB-Controller (5) als USB Audio Device (12) zum kontinuierlichen Übertragen der Audioinformationen zwischen Maus (4) und Computer (2) ausgebildet ist.

2. System gemäß Anspruch 1, **dadurch gekennzeichnet, dass** die Maus (4) Diktiertasten (8) aufweist, die das Aufnehmen und Wiedergeben von Diktaten unterstützen, und, dass der USB-Controller (5) zum Übertragen der mit den Diktiertasten (8) eingegebenen Tasteninformationen über das USB Human Interface Device (14) über einen von dem Computer (2) abgearbeiteten Diktierbefehlstreiber zum Steuern der von dem Computer (2) abgearbeiteten Diktierapplikation ausgebildet ist.

3. System gemäß Anspruch 1, **dadurch gekennzeichnet, dass** ein Schiebeschalter und/oder ein Wippschalter als Diktiertaste (8) vorgesehen ist.

4. System gemäß einem der vorhergehenden Ansprüche, **dadurch gekennzeichnet, dass** die Maus (4) ein Mausmodul (7) zum Detektieren von Bewegungen der Maus (4) und zum Abgeben von Mausbewegungsinformationen aufweist und, dass der USB-Controller (5) als USB Mouse Device (13) zum kontinuierlichen Übertragen der Mausbewegungsinformationen ausgebildet ist und, dass der USB-Controller (5) zum Zusammenfassen des USB Audio Device (12), des USB Human Interface Device (14) und des USB Mouse Device (13) zu einem gemeinsamen USB Composite Device (15) ausgebildet ist und, dass das USB Composite Device (15) zum kontinuierlichen Übertragen der Audioinformationen, der Tasteninformationen und der Mausbewegungsinformationen zwischen Maus (4) und Computer (2) ausgebildet ist.

5. System gemäß einem der vorhergehenden Ansprüche, **dadurch gekennzeichnet, dass** die erste Funkschnittstelle (6) dem Bluetooth-Standard entspricht und Audioinformationen insbesondere als Wideband Speech oder als Advanced Audio Distribution Profile übertragen werden.

6. System gemäß einem der vorhergehenden Ansprüche, **dadurch gekennzeichnet, dass** der Computer (2) die Maus (4) als USB Composite Device (15) detektiert.

7. System gemäß Anspruch 4, **dadurch gekennzeichnet, dass** die Maus (4) eine zweite Funkschnittstelle (17) aufweist, die zum kontaktlosen Kommunizieren mit einer dritten Funkschnittstelle (18) eines an die USB-Schnittstelle (10) des Computers (2) angesteckten USB Dongles (16) ausgebildet ist, wobei die Audioinformationen zwischen Maus (4) und USB Dongle (16) kontaktlos über die zweite Funkschnittstelle (17) und die dritte Funkschnittstelle (18) übertragen werden.

8. System gemäß Anspruch 7, **dadurch gekennzeichnet, dass** die Audioinformationen, die Tasteninformationen und die Mausbewegungsinformationen zwischen Maus (4) und USB Dongle (16) kontaktlos über die zweite Funkschnittstelle (17) und die dritte Funkschnittstelle (18) übertragen werden.

9. System gemäß Anspruch 7 oder 8, **dadurch gekennzeichnet, dass** der USB Dongle (16) zum Zusammenfassen des USB Audio Device (12), des USB Human Interface Device (14) und des USB Mouse Device (13) zu einem gemeinsamen USB Composite Device (15) ausgebildet ist, und über das USB Composite Device (15) zum kontinuierlichen Übertragen der Audioinformationen, der Tasteninformationen und der Mausbewegungsinformationen zwischen USB Dongle (16) und Computer (2) ausgebildet ist.

10. Verfahren zum kontinuierlichen Übertragen von Audioinformationen zwischen einem Computer (2) mit einer USB-Schnittstelle (10) und einer mit der USB-Schnittstelle (10) des Computers (2) verbundenen Maus (4), die einen USB-Controller (5) aufweist und als USB Human Interface Device (14) zum Steuern einer von dem Computer (2) abgearbeiteten Diktierapplikation ausgebildet ist, wobei die Audioinformationen mit einem Headset (3) ein- und wiedergegeben werden, **dadurch gekennzeichnet, dass** folgende Verfahrensschritte gegebenenfalls auch gleichzeitig durchgeführt werden:
A) Kontaktloses Empfangen der Audioinformationen vom Headset (3) mit einer ersten Funkschnittstelle (6) der Maus (4),
B) Übermitteln der Audioinformationen von der ersten Funkschnittstelle (6) der Maus (4) an den USB-Controller (5), und
C) Übertragen der Audioinformationen vom USB-Controller (5) als USB Audio Device (12) an den Computer (2), und/oder
C) Übertragen der Audioinformationen vom Computer (2) an den das USB Audio Device (12) bildenden USB-Controller (5),
B) Übermitteln der Audioinformationen vom USB-Controller (5) an die erste Funkschnittstelle (6) der Maus (4), und
A) Kontaktloses Senden der Audioinformationen von der ersten Funkschnittstelle (6) der Maus (4) an das Headset (3).

11. Verfahren gemäß Anspruch 10, **dadurch gekennzeichnet, dass** folgende Verfahrensschritte gegebenenfalls auch gleichzeitig durchgeführt werden, wobei die folgenden Verfahrensschritte gegebenenfalls vor, nach, oder gleichzeitig mit den Verfahrensschritten A) bis C) durchgeführt werden:
D) Detektieren einer mit einer Diktiertaste (8) eingegebenen Tasteninformation,
E) Übertragen der detektierten Tasteninformation vom USB-Controller (5) als Human Interface Device (14) an den Computer (2), zum Steuern eines von dem Computer (2) abgearbeiteten Diktierbefehlstreibers, und
F) Abarbeiten einer Diktierapplikation am Computer (2).

12. Verfahren gemäß Anspruch 10 oder 11, **dadurch gekennzeichnet, dass** folgende Verfahrensschritte gegebenenfalls auch gleichzeitig durchgeführt werden, wobei die Verfahrensschritte gegebenenfalls vor, nach, oder gleichzeitig mit den Verfahrensschritten A) bis F) durchgeführt werden:
G) Detektieren einer Mausbewegung der Maus (4) mit einem Mausmodul (7),
H) Übermitteln einer Mausbewegungsinformationen der Mausbewegung der Maus (4) an den USB-Controller (5), und
I) Übertragen der Mausbewegungsinformationen vom USB-Controller (5) als USB Mouse Device (13) an den Computer (2).

13. Verfahren gemäß Anspruch 12, **dadurch gekennzeichnet, dass** der USB-Controller (5) das USB Audio Device (12), das USB Human Interface Device (14) und das USB Mouse Device (13) zu einem gemeinsamen USB Composite Device (15) zusammenfasst, und dass die Verfahrensschritte C), E) und I) vom USB-Controller (5) als USB Composite Device (15) durchgeführt werden.

14. Verfahren gemäß Anspruch 12, **dadurch gekennzeichnet, dass** in den Verfahrensschritten C), E) und I) die Tasteninformationen, die Audioinformationen, und die Mausbewegungsinformationen jeweils vom USB-Controller (5) kontaktlos über eine zweite Funkschnittstelle (17) der Maus (4) und eine dritte Funkschnittstelle (18) eines USB-Dongles (16), der an der USB-Schnittstelle (10) des Computers (2) angesteckt ist, an den Computer (2) übertragen werden.

15. Verfahren gemäß Anspruch 14, **dadurch gekennzeichnet, dass** der USB-Dongle (16) die Tasteninformationen als USB Human Interface Device (14), die Audioinformationen als USB Audio Device (12), und die Mausbewegungsinformationen als USB Mouse Device (13) zu einem gemeinsamen USB Composite Device (15) zusammenfasst und die Tasteninformationen, die Audioinformationen und die Mausbewegungsinformationen über das USB Composite Device (15) an den Computer (2) übermittelt.
